# DEMANDE DE BREVET EUROPEEN

(11) **EP 3 364 338 A1**
(43) Date de publication de la demande: **22.08.2018**
(21) Numéro de dépôt: 18156824.7
(22) Date de dépôt: 14.02.2018
(51) Int. Cl.: G06K 9/00, G06K 9/46, G06T 5/50, H04N 5/235, B60W 40/08

(54) **DISPOSITIF DE COMPRESSION D'UNE SÉQUENCE VIDÉO ET DISPOSITIF DE SURVEILLANCE D'UN CONDUCTEUR COMPRENANT UN TEL DISPOSITIF DE COMPRESSION**

(30) Priorité: 15.02.2017 FR 1751212
(71) Demandeur: Valeo Comfort and Driving Assistance, 94046 Créteil Cedex (FR)
(72) Inventeur: KOUADRI, Abdellah, 94046 Créteil CEDEX (FR); CLERC-RENAUD, Edouard, 94046 Créteil CEDEX (FR)
(74) Mandataire: Delplanque, Arnaud

(57) **Abrégé**

L'invention porte sur un dispositif de compression (10) d'une séquence vidéo comprenant un module d'acquisition d'image (12) conçu pour recevoir des signaux représentant une séquence vidéo, un module de suivi (14) conçu pour suivre un objet dans la séquence vidéo et pour générer un signal de suivi (S) correspondant, l'objet étant défini sous la forme d'au moins une zone d'intérêt déterminée sur chaque image (IMG) de la séquence vidéo, un module d'extraction (18) conçu pour extraire, dans chaque image (IMG) de la séquence vidéo, une partie correspondant à ladite au moins une zone d'intérêt et définie en fonction du signal de suivi (S), et un module de compression (20) conçu pour appliquer un algorithme de compression à une séquence formée seulement des parties successivement extraites.

L'invention concerne également un dispositif de surveillance (1) d'un conducteur comprenant un tel dispositif de compression.

## Description

### DOMAINE TECHNIQUE AUQUEL SE RAPPORTE L'INVENTION

L'invention concerne le traitement d'images acquises à des fins de surveillance d'un conducteur pendant la conduite d'un véhicule.

L'invention concerne plus particulièrement un dispositif de compression d'une séquence vidéo et un dispositif de surveillance comprenant un tel dispositif de compression.

Dans le cadre de la présente invention, une séquence vidéo peut être aussi bien une vidéo traditionnelle, c'est-à-dire une séquence d'images comme celle d'un film TV, qu'une suite d'images singulières prises à des intervalles tels qu'il en résulte une suite d'images déroulant par saccades.

Le procédé de compression vidéo selon l'invention est principalement destiné à être utilisé dans des systèmes de surveillance par caméra vidéo. Un domaine d'application préféré de ce procédé est celui de la surveillance d'un conducteur pendant la conduite d'un véhicule, notamment d'un camion mais aussi d'une voiture dite de tourisme, par exemple pour déterminer un niveau de somnolence ou un niveau de distraction du conducteur.

L'invention s'applique aussi dans des cas où l'on souhaite analyser, par exemple à la suite d'un accident de la route, les gestes du conducteur pour déterminer un lien de cause à effet éventuel entre ces gestes et l'accident.

Pour des systèmes de surveillance par caméra vidéo de conducteurs de véhicules, l'enregistrement de vidéos en temps réel est aussi très important à d'autres fins, telles que la mise au point des logiciels utilisés.

Cependant, l'enregistrement de vidéos en temps réel pose le problème de l'efficacité de stockage, par exemple en ce qui concerne la capacité de mémoire nécessaire pour pouvoir enregistrer les images vidéo pendant une durée de temps assez importante, par exemple de l'ordre de plusieurs jours, notamment lorsqu'il s'agit d'un enregistrement dans un système embarqué. Pour cela, on cherche à réduire le plus possible la taille en données de la vidéo enregistrée.

Lorsque les vidéos de surveillance doivent être transmises à distance, par exemple à un centre de télésurveillance, il pourrait être souhaitable, voire nécessaire, de réduire le plus possible la taille en données d'une vidéo enregistrée, dans une situation d'encombrement des voies de transmission de la vidéo ou pour prévenir à une telle situation.

### ARRIÈRE-PLAN TECHNOLOGIQUE

Le document US 8 773 498 B2 enseigne que l'on peut réduire la quantité de données représentant une image vidéo lors d'une vidéoconférence, notamment la quantité de données représentant un fond d'image de l'image vidéo, en baissant la qualité du fond d'image sur la base d'une détection de la ou de plusieurs zones d'intérêt, la zone d'intérêt comprenant des participants à la vidéoconférence ou une zone d'intérêt individuelle étant déterminée pour chaque participant.

Ainsi, selon cette technique antérieure, l'image est traitée de façon que l'aire de zones d'intérêt soit augmentée aux dépens de zones de moindre intérêt. Pour cela, on détermine d'abord des zones d'intérêt, c'est-à-dire des parties d'image montrant par exemple les têtes des participants d'une vidéoconférence. Ensuite, on détermine des zones de fond d'image compressibles et on les compresse. De cette façon, on augmente proportionnellement l'aire des zones d'intérêt de l'image. L'image peut aussi être découpée ou recadrée avant que les zones de fond d'image ne soient déterminées. On obtient ainsi une image intermédiaire qui contient toutes les zones d'intérêt de l'image initiale et le moins possible de zones de moindre intérêt. Les zones de moindre intérêt peuvent ensuite être compressées selon différents critères et à différents degrés de compression.

Le document US 2006/062478 A1 enseigne que l'on peut réduire de manière intelligente la quantité de données représentant une image vidéo, notamment dans le domaine de la surveillance par vidéo, en utilisant un procédé de compression vidéo avec différents niveaux de compression selon la zone d'intérêt détectée.

Ainsi, selon cette technique antérieure, l'image est traitée en définissant, manuellement ou en temps réel par un système intelligent automatique, des zones d'intérêt auxquelles l'utilisateur ou le système automatique attribue un degré de priorité plus élevé que pour le reste de l'image vidéo. La définition automatique des zones d'intérêt peut être effectuée par exemple sur la base d'une détection de mouvement ou par le suivi d'un objet.

L'image est ensuite traitée en appliquant aux zones d'intérêt et au reste de l'image des types de compression différents selon la priorité attribuée à chaque zone et au reste de l'image.

La réduction de la taille des vidéos enregistrées passant par des techniques de compression de l'ensemble de la séquence vidéo concernée, il en résulte en général une perte de données vidéo dans le seul but d'une optimisation de la taille des images vidéo enregistrées. Mais une perte de données vidéo signifie une dégradation de la qualité de la vidéo enregistrée, ce qui signifie à son tour une baisse directe des performances des algorithmes utilisés lors de l'exploitation des images vidéo et, ainsi, une baisse des performances du système de surveillance.

### OBJET DE L'INVENTION

Le but de l'invention est de proposer un traitement d'une séquence d'images prises qui permette à la fois une réduction de la taille en données des images, une compression vidéo en temps réel et la conservation d'un niveau prédéterminé de qualité des images vidéo enregistrées.

Le but de l'invention est atteint avec un dispositif de compression d'une séquence vidéo comprenant un module d'acquisition d'image conçu pour recevoir des signaux représentant une séquence vidéo, un module de suivi conçu pour suivre un objet dans la séquence vidéo et pour générer un signal de suivi correspondant, l'objet étant défini sous la forme d'au moins une zone d'intérêt déterminée sur chaque image de la séquence vidéo, un module d'extraction conçu pour extraire, dans chaque image de la séquence vidéo, une partie correspondant à ladite au moins une zone d'intérêt et définie en fonction du signal de suivi, et un module de compression conçu pour appliquer un algorithme de compression à une séquence formée seulement des parties successivement extraites.

Le module d'extraction peut être conçu pour extraire, dans chaque image de la séquence vidéo, une partie correspondant à l'objet à surveiller.

Le module de compression peut aussi être conçu pour extraire, dans chaque image de la séquence vidéo, une ou plusieurs parties correspondant notamment à l'un au moins parmi les éléments suivants :
- une partie au moins de la tête du conducteur,
- les mains du conducteur, par exemple en vue d'une reconnaissance de gestes,
- toute la partie de corps du conducteur vue par des moyens de capture d'image pour suivre les mouvements du corps,
- des éléments des alentours du véhicule tels que des routes, des piétons, des panneaux de signalisation routière.

Le dispositif de compression peut comprendre des moyens adaptés pour utiliser des informations d'images précédentes pour détecter au moins une anomalie sur la (ou les) zone(s) d'intérêt, afin de procéder à la compression de l'ensemble de l'image courante (i.e. d'inhiber l'extraction de la partie correspondant à la zone d'intérêt) en cas de détection d'anomalie.

Le but de l'invention est également atteint avec un dispositif de surveillance d'un conducteur d'un véhicule comprenant des moyens de capture d'image conçus pour prendre au moins une séquence vidéo (montrant par exemple le comportement d'un conducteur à surveiller), un dispositif de compression de ladite séquence vidéo tel que décrit plus haut, un dispositif d'enregistrement conçu pour enregistrer au moins temporairement la séquence vidéo compressée obtenue à l'aide du dispositif de compression.

Selon différentes variations de réalisation du dispositif de surveillance selon l'invention, ce dernier peut avoir l'une au moins des caractéristiques suivantes :
- le dispositif d'enregistrement du dispositif de surveillance est conçu pour enregistrer ladite au moins une séquence vidéo dans une mémoire adaptée pour servir comme moyen d'archivage ;
- le dispositif d'enregistrement est conçu pour enregistrer ladite au moins une séquence vidéo dans une mémoire adaptée pour servir comme mémoire tampon pour une liaison de télétransmission reliant le dispositif de surveillance à une station de télésurveillance ;
- le dispositif de surveillance comprend un capteur de position du volant du véhicule ;
- le module d'extraction est conçu pour extraire ladite partie en tenant compte de la position du volant du véhicule ;
- le dispositif de surveillance peut comprendre une source de lumière destinée à illuminer l'objet à surveiller.

Le but de l'invention est enfin atteint avec un procédé de réduction de la taille en données d'une image enregistrée d'un objet à surveiller, par exemple d'une image d'une séquence vidéo, utilisant un procédé de compression vidéo qui définit sur l'image ou sur chaque image d'une séquence vidéo, au moins une zone d'intérêt, qui utilise un algorithme de compression et qui se sert en temps réel d'un signal de suivi pour définir sur chaque image ladite au moins une zone d'intérêt constituant une partie d'image à extraire et à soumettre au procédé de compression.

Selon différentes variations de mise en oeuvre du procédé de réduction selon l'invention, ce dernier peut avoir l'une au moins des caractéristiques suivantes :
- sur chaque image de ladite au moins une zone d'intérêt toutes les données à l'extérieur de ladite au moins une zone d'intérêt sont supprimées ;
- ladite au moins une zone d'intérêt comprend la partie d'image montrant la tête d'un conducteur à surveiller ;
- ladite au moins une zone d'intérêt comprend la (ou des) partie(s) d'image montrant l'un au moins parmi les éléments suivants :
   * ensemble ou non avec une zone d'intérêt comportant une partie de la tête du conducteur, les mains pour une reconnaissance de gestes ;
   * toute la partie de corps vue par la caméra pour suivre les mouvements du corps ;
   * des éléments des alentours du véhicule tels que des routes, des piétons, des panneaux de signalisation routière.

Les signaux de suivi utilisés dans le cadre de la mise en oeuvre du procédé selon l'invention sont principalement des signaux représentant le suivi de la position d'au moins un des yeux dans l'image ou dans le cadre de limitation de la tête.

En effet, les systèmes de surveillance de conducteur peuvent être utilisés pour de nombreuses applications. Toutefois, la présente description ne fait référence, à titre d'exemple non limitatif, qu'à deux d'entre elles, à savoir la détection de signes de fatigue ou de distraction chez le conducteur et la détermination d'un niveau de somnolence et/ou d'un niveau de distraction, d'une part, et la surveillance du comportement et des manipulations du conducteur sur un trajet du véhicule, d'autre part.

Lorsqu'il s'agit de détecter chez le conducteur des signes de fatigue et notamment de déterminer un niveau de somnolence, il suffit généralement d'analyser le comportement des yeux du conducteur pour y détecter par exemple un clignement anormal des yeux. Pour cela, il est donc suffisant, en termes de taille de l'image, d'analyser l'image de la seule tête ou même d'une partie de la tête seulement. On définit alors sur l'image en premier une zone d'intérêt, généralement rectangulaire, qui ne contient que la tête du conducteur ou la partie de la tête autours des yeux, voire même autours d'un seul des yeux.

Puisque, pendant la conduite du véhicule, le conducteur ne peut pas garder la tête immobile, la zone d'intérêt de l'image ne peut pas être fixe non plus. Elle est alors déplacée sur l'image à l'aide d'un logiciel de suivi utilisant des signaux de suivi déduits de deux ou de davantage d'images successifs.

Lorsqu'il s'agit de surveiller le comportement du conducteur pendant la conduite du véhicule, notamment lorsqu'il s'agit de surveiller certains gestes, il peut être nécessaire de définir plusieurs zones d'intérêt, par exemple une zone contenant l'image d'un des yeux ou des deux yeux du conducteur pour enregistrer le mouvement des yeux (notamment la direction du regard) et une ou deux zones pour les mains pour enregistrer des gestes de manipulation pour actionner l'une ou l'autre des différentes commandes du véhicule (par exemple de l'autoradio ou du système de climatisation). A chacune de ces zones sont associés des signaux de suivi déduits de deux ou de davantage d'images successifs de chacune de ces zones.

Dans le domaine des systèmes de surveillance de conducteurs, la zone d'intérêt représente environ 40% de l'image. Par la sélection ou - en termes de procédé selon l'invention - par l'extraction d'une partie de l'image, on obtient une image vidéo plus réduite qui contient cependant dans cette zone d'intérêt encore toutes les données capturées par le système de surveillance. Ces données de la zone d'intérêt sont donc entièrement disponibles pour un traitement de l'image vidéo réduite, par un algorithme de surveillance de conducteurs lors d'une exploitation des images vidéo réduites enregistrées. Ceci permet finalement d'utiliser des techniques classiques de compression vidéo sans pertes d'informations pour exploiter lesdites images vidéo réduites.

Pour améliorer la réduction de la taille en données d'une image enregistrée d'un objet à surveiller et pour améliorer par cela la compression vidéo, il est possible d'utiliser la position du volant du véhicule pour déterminer la zone d'intérêt. On peut même prévoir que, lorsqu'une partie du volant est située au droit du capteur et cache donc le visage du conducteur, aucun enregistrement n'est réalisé.

Une autre possibilité pour améliorer la compression vidéo est d'effacer toutes les données de l'image lorsqu'il n'y a pas de conducteur devant la caméra. La présence ou l'absence de conducteur peut être détectée par un capteur situé par exemple dans le siège de conducteur, par une autre caméra ou par un capteur volumique de présence.

### DESCRIPTION DÉTAILLÉE D'UN EXEMPLE DE RÉALISATION

D'autres caractéristiques et avantages de la présente invention ressortiront de la description ci-après d'un exemple de traitement d'une image vidéo selon la présente invention, la description étant faite en référence aux dessins annexés donnés uniquement à titre d'exemple et dont :
- la figure 1 représente schématiquement un exemple de dispositif de surveillance d'un conducteur de véhicule conforme à l'invention, et
- la figure 2 représente une image de conducteur extraite d'une vidéo prise par la caméra d'un dispositif de surveillance de conducteur.

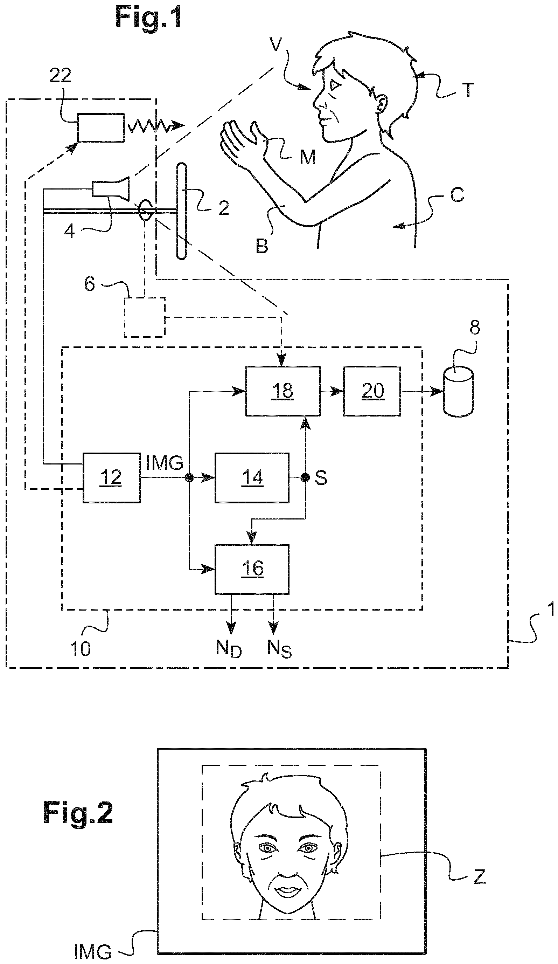

La figure 1 représente schématiquement, à titre d'exemple non limitatif de réalisation de la présente invention, un dispositif de surveillance 1 d'un conducteur de véhicule représenté par son corps C, sa tête T avec le visage V, un de ses bras B et une de ses mains M. L'exemple de véhicule choisi est celui d'un véhicule automobile dans l'habitacle duquel sont installés le volant 2 du véhicule automobile et le dispositif de surveillance 1.

Le dispositif de surveillance 1 comprend des moyens de capture d'image 4, de préférence sous la forme d'une caméra vidéo, un capteur de position de volant 6 et un dispositif d'enregistrement de séquences vidéo compressées 8. Le dispositif de surveillance 1 comprend en outre un dispositif de compression 10 conçu pour recevoir et traiter des signaux représentant les images d'une ou de plusieurs séquences vidéo capturées par les moyens de capture d'images 4.

Le capteur de position de volant 6 est un élément optionnel qui ne constitue donc qu'une caractéristique supplémentaire de l'invention, tout comme une source de lumière 22, par exemple une source de lumière infrarouge, qui peut compléter les moyens de capture d'image 4 pour améliorer la qualité des images capturées pendant une conduite de nuit.

Dans le mode de réalisation décrit ici, les moyens de capture d'image 4 sont montés sous le pare-brise, sur le tableau de bord. Toutefois, les moyens de capture d'image peuvent en variante être installés au-dessus du pare-brise, tout comme ils peuvent être placés latéralement, par exemple, en face du siège du conducteur ou approximativement au milieu du pare-brise. Un positionnement des moyens de capture d'image 4 en face du siège de conducteur facilite la surveillance du comportement des yeux du conducteur, alors qu'un positionnement des moyens de capture d'image 4 au milieu du bord supérieur ou inférieur du pare-brise peut faciliter la surveillance de mouvements du corps du conducteur ou de gestes effectués par exemple sur une console centrale de la cabine de conduite.

Le dispositif de compression 10 représenté sur la figure 1 comprend un module d'acquisition d'image 12 conçu pour recevoir successivement les signaux représentant les images d'une ou de plusieurs séquences vidéo et pour en produire une suite d'images IMG destinées à être exploitées pour la surveillance du conducteur. Le module d'acquisition d'image 12 est également conçu pour commander la source de lumière 22 en fonction de besoins éventuels d'éclairage supplémentaire du conducteur à surveiller.

Le dispositif de compression 10 comprend en outre un module de suivi 14 conçu pour suivre dans la séquence vidéo le conducteur à surveiller et pour générer un signal de suivi S correspondant, un module de traitement d'image 16 conçu pour traiter les signaux représentant les images de façon à en déduire des signaux N_{D} représentatifs d'un niveau de distraction du conducteur et/ou des signaux N_{S} représentatifs d'un niveau de somnolence du conducteur, et un module d'extraction 18 conçu pour extraire, dans chaque image de la séquence vidéo, une partie qui est définie en fonction du signal de suivi S.

Comme expliqué plus loin, la partie extraite par le module d'extraction 18 correspond à une zone d'intérêt indiqué par le signal de suivi S.

On peut prévoir en outre que le module d'extraction 18 procède à l'extraction susmentionnée en tenant compte en outre de la position du volant fournie par le capteur de position de volant 6, par exemple en supprimant lors de l'extraction les régions de l'image courante IMG qui correspondent au volant.

Le dispositif de compression 10 comprend enfin un module de compression 20 conçu pour appliquer un algorithme de compression à une séquence formée seulement des parties successivement extraites des images de la séquence vidéo.

Conformément à l'invention, le dispositif de surveillance 1 d'un conducteur est conçu pour surveiller une partie significative seulement du conducteur pour en déduire la présence éventuelle d'une somnolence ou d'une distraction de celui-ci. Par conséquent, l'objet à surveiller n'est pas le conducteur proprement dit mais une ou plusieurs parties seulement de l'image de celui-ci, appelées les zones d'intérêt de l'image, comme par exemple la partie de l'image montrant un de ses yeux ou une de ses mains M ou deux parties d'images montrant son visage V et une de ses mains M ou un de ses bras B.

Comme cela ressort de la figure 1, le dispositif de surveillance 1 d'un conducteur fonctionne essentiellement de la façon suivante.

Des signaux représentant des images d'une séquence vidéo capturées à l'aide des moyens de capture d'image 4, par exemple d'une caméra vidéo 4, sont envoyés au module d'acquisition d'image 12 qui en produit des signaux représentatifs d'images IMG. Les signaux représentatifs des images IMG sont envoyés simultanément au module de suivi 14 qui en déduit les signaux de suivi S, au module de traitement d'image 16 qui en déduit des signaux représentatifs d'un niveau éventuel de somnolence NS ou de distraction ND du conducteur, et au module d'extraction 18 extrayant de chacune des images IMG la ou les zones d'intérêt de cette image sur la base desquelles la surveillance du conducteur doit être effectuée.

Les signaux de suivi S sont envoyés simultanément au module de traitement d'image 16 et au module d'extraction 18 pour la définition et le suivi de la ou des zones d'intérêt de chacune des images IMG et pour en déduire respectivement des signaux représentatifs desdits niveau de somnolence et/ou de niveau de distraction du conducteur et des signaux représentatifs d'images vidéo destinées à être compressées par le module de compression 20. La sortie du dispositif de compression 10 fournit des signaux représentatifs d'images partielles constituées par les seules parties d'images extraites des images IMG et compressées selon un procédé de compression, ici un procédé de compression sans pertes.

La figure 2 représente une image de conducteur IMG faisant partir d'une séquence vidéo prise par la caméra vidéo 4 d'un dispositif de surveillance 1 de conducteur.

La caméra vidéo 4 du dispositif de surveillance de conducteur est avantageusement installée dans l'habitacle dans une position en dessous ou au dessus du pare-brise du véhicule qui permette d'avoir la tête T du conducteur au centre de l'image lorsque le conducteur regarde droit devant lui. La position de départ de la tête sur l'image est généralement celle que l'on trouve sur l'image pendant la plus grande partie d'un parcours d'un véhicule. Cette image de départ peut être utilisée accessoirement par exemple pour une identification du conducteur. L'image montre aussi un fond d'image, devant lequel fond d'image la tête est en mouvement en fonction des mouvements et gestes du conducteur pendant la conduite ou pendant des manoeuvres de stationnement du véhicule. Afin de pouvoir capter l'image de la tête du conducteur pendant l'ensemble de ces mouvements, la caméra doit capter une image assez grande. Dans l'exemple représenté, l'image vidéo non compressée a une taille de 1 Go.

Lorsque l'on définit une zone d'intérêt, ou un ensemble de zones d'intérêt, correspondant à environ 40 % de l'image et lorsque l'on part d'une disponibilité du signal de suivi d'environ 95 %, environ 60 % des données d'image sont inutiles pendant 95 % de la vidéo. On peut effacer ces 60 % des données ou on peut extraire les 40 % de données utiles. Dans les deux cas, il en résulte une nouvelle image vidéo non encore compressée ni ayant subi des pertes de données qui a une taille de seulement 430 Mo.

A titre de comparaison : lorsque l'on utilise pour l'image initiale, donc entière, un algorithme de compression classique sans pertes, on obtient une vidéo réduite à la moitié, c'est-à-dire ayant une taille de 500 Mo.

Le traitement de l'image vidéo selon la présente invention apporte donc l'avantage que, déjà avant compression, l'image est plus petite en taille de données que l'image directement compressée de manière classique. De plus, la nouvelle vidéo réduite peut être traitée avec un algorithme de compression classique sans pertes. La vidéo qui en résulte est encore plus petite que la vidéo selon les anciennes méthodes de compression.

C'est cette image réduite qui est utilisée ensuite pour l'enregistrement et, le cas échéant, pour une transmission à distance, par exemple à une station de télésurveillance.

Sur la figure 2, une seule zone d'intérêt (ou ROI pour "Région of Interest") Z est définie : c'est ici une zone rectangulaire.

Toutefois, comme déjà indiqué plus haut, selon la présente invention, il est possible de définir deux ou encore davantage de zones d'intérêt. Les zones d'intérêt peuvent également comprendre :
- ensemble ou non avec une zone d'intérêt comportant une partie de la tête du conducteur, les mains pour une reconnaissance de gestes,
- toute la partie de corps vue par la caméra pour suivre les mouvements du corps,
- des éléments des alentours tels que des routes, des piétons, des panneaux de signalisation routière.

Lorsque l'image vidéo montre aussi une partie des alentours du véhicule avec des éléments tels que des routes, des piétons, des panneaux de signalisation routière ou bien d'autres, la suppression d'une partie de l'image peut concerner par exemple le ciel visible sur la vidéo.

## Revendications

1. Dispositif de compression d'une séquence vidéo comprenant :
- un module d'acquisition (12) d'image conçu pour recevoir des signaux représentant une séquence vidéo,
- un module de suivi (14) conçu pour suivre un objet dans la séquence vidéo et pour générer un signal de suivi (S) correspondant, l'objet étant défini sous la forme d'au moins une zone d'intérêt (Z) déterminée sur chaque image (IMG) de la séquence vidéo,
- un module d'extraction (18) conçu pour extraire, dans chaque image (IMG) de la séquence vidéo, une partie correspondant à ladite au moins une zone d'intérêt (Z) et définie en fonction du signal de suivi (S), et
- un module de compression (20) conçu pour appliquer un algorithme de compression à une séquence formée seulement des parties successivement extraites.

2. Dispositif de compression selon la revendication 1, **caractérisé en ce que** le module d'extraction (18) est conçu pour extraire, dans chaque image (IMG) de la séquence vidéo, une partie correspondant à l'objet à surveiller.

3. Dispositif de compression selon la revendication 2, **caractérisé en ce que** le module de compression est conçu pour extraire, dans chaque image de la séquence vidéo, une ou plusieurs parties correspondant à l'un au moins parmi les éléments suivants :
- une partie au moins de la tête (T) du conducteur ;
- les mains (M) du conducteur,
- toute la partie de corps (C) du conducteur vue par des moyens de capture d'image,
- des éléments des alentours du véhicule tels que des routes, des piétons, des panneaux de signalisation routière.

4. Dispositif de compression selon l'une quelconque des revendications 1 à 3, **caractérisé en ce qu'**il comprend des moyens adaptés pour utiliser des informations d'images précédentes pour détecter au moins une anomalie sur la zone d'intérêt (Z).

5. Dispositif de surveillance d'un conducteur d'un véhicule comprenant
- des moyens de capture d'image (4) conçus pour prendre au moins une séquence vidéo montrant le comportement d'un conducteur à surveiller,
- un dispositif de compression de ladite séquence vidéo selon l'une quelconque des revendications 1 à 4,
- un dispositif d'enregistrement (8) conçu pour enregistrer au moins temporairement la séquence vidéo compressée obtenue à l'aide du dispositif de compression.

6. Dispositif de surveillance selon la revendication 5, **caractérisé en ce que** le dispositif d'enregistrement (8) est conçu pour enregistrer ladite au moins une séquence vidéo dans une mémoire adaptée pour servir comme moyen d'archivage.

7. Dispositif de surveillance selon la revendication 5, **caractérisé en ce que** le dispositif d'enregistrement (8) est conçu pour enregistrer ladite au moins une séquence vidéo dans une mémoire adaptée pour servir comme mémoire tampon pour une liaison de télétransmission reliant le dispositif de surveillance à une station de télésurveillance.

8. Dispositif de surveillance selon l'une quelconque des revendications 5 à 7, **caractérisé en ce qu'**il comprend un capteur (6) de position du volant du véhicule.

9. Dispositif de surveillance selon la revendication 8, **caractérisé en ce que** le module d'extraction (18) est conçu pour extraire ladite partie en tenant compte de la position du volant du véhicule.

10. Dispositif de surveillance selon l'une quelconque des revendications 5 à 9, **caractérisé en ce qu'**il comprend une source de lumière (22) destinée à illuminer l'objet à surveiller.
